**Europäisches Patentamt**

**European Patent Office**

**Office européen des brevets**

(19)

(11) Veröffentlichungsnummer: **0 132 222**
**B1**

(12) **EUROPÄISCHE PATENTSCHRIFT**

(45) Veröffentlichungstag der Patentschrift:
21.06.89

(21) Anmeldenummer: **84810239.8**

(22) Anmeldetag: **15.05.84**

(51) Int. Cl.⁴: **G 01 L 9/12**, G 01 L 9/00,
G 01 D 5/24

(54) Kapazitiver Weg-Frequenz-Messgrössenwandler, insbesondere Druck-Frequenz-Wandler.

(30) Priorität: **20.05.83 CH 2769/83**

(43) Veröffentlichungstag der Anmeldung:
**23.01.85 Patentblatt 85/4**

(45) Bekanntmachung des Hinweises auf die Patenterteilung:
**21.06.89 Patentblatt 89/25**

(84) Benannte Vertragsstaaten:
**DE GB SE**

(56) Entgegenhaltungen:
**EP-A-0 074 037**
**DE-A-2 117 932**
**DE-A-2 518 450**
**DE-A-2 727 173**
**DE-A-2 950 891**
**DE-A-3 037 802**
**DE-A-3 122 438**
**US-A-4 237 900**
**US-A-4 249 147**

(73) Patentinhaber: **KERN & CO. AG Werke für Präzisionsmechanik Optik und Elektronik, CH-5001 Aarau (CH)**

(72) Erfinder: **Meier, Dietrich, Dr., Bläuenstrasse 792, CH- 5015 Erlinsbach (DE)**

(74) Vertreter: **Seeger, Jan, c/o Kern & Co. AG, CH-5001 Aarau (CH)**

EP 0 132 222 B1

## Beschreibung

Die Erfindung betrifft einen kapazitiven Weg-Frequenzwandler, insbesondere einen Druck-Frequenzwandler mit wenigstens einer von dem zu messenden Druck beaufschlagten metallischen Membran, deren Lage gegenüber einer Gegenelektrode sich in Abhängigkeit von der Messgrösse ändert.

Druckmessdosen zur Messung von Drücken und Druckdifferenzen auf kapazitivem Wege sind bekannt. So ist in DE-OS-3 122 438 (The Bendix Corp.) eine derartige Messdose beschrieben, deren Gehäuse drei Abteilungen enthält, nämlich die Druckmessdose, druckaufnehmende Membranen und eine Elektronik zur Umsetzung der Druckparameter in elektrische Signale. Mit der Druckmessdose zusammenwirkende Gehäuseabteile und Rohre bilden zwei Hohlräume für Medien von zwei Drücken mit unterschiedlichen Pegeln, wobei die Druckmessdose zusammen mit der Elektronik kapazitive Signale für die zu messenden Drücke bzw. Druckunterschiede erzeugt.

Es ist weiterhin aus der DE-OS-2 950 891 (Licentia) ein Druck- oder Kraftaufnehmer mit Oberflächenwellen-Anordnung bekannt, bei dem diese Anordnung durch Reflektoren zu einem Resonator vervollständigt ist, derart, dass sich Resonanzfrequenz des Resonators mit der zu messenden Kraft bzw. dem Druck verändert.

Auch ist aus der DE-OS-3 037 802 (Robert Bosch GmbH) schon ein kapazitiver Weg-Frequenz-Messgrössenwandler, insbesondere ein Druck-Frequenz-Wandler bekannt, bei dem zur Bildung der Kapazität eine von dem zu messenden Druck beaufschlagte metallische Membran einer Druckdose vorgesehen ist. Der Kondensator wird als frequenzbestimmende Grösse in einem RC-Oszillator verwendet. Dabei wird eine Auflösung von etwa 5 kHz/mbar erreicht.

Aus EP-A1-74 037 (Fraunhofer-Gesellschaft) ist ein Drucksensor bekannt, der aus einem zylindrischen Topfkreis mit als Membran ausgebildeter Stirnfläche und einem Oszillator besteht. Die Frequenz des Oszillatorsignals ist ein Mass für den auf die Membran wirkenden Druck. Die Membran steht einer Platte in einem Abstand gegenüber, der die Kapazität zwischen diesen Teilen und damit zusammen mit der Induktivität einer Wicklung die Frequenz des von diesen Teilen gebildeten Topfkreises bestimmt. Der angeschlossene Oszillator schwingt auf dieser Frequenz. Dieser Sensor ist für spezielle intrakranielle Druckmessungen als unabhängiger Druckgeber geeignet.

Aufgabe der vorliegenden Erfindung ist es, einen kapazitiven Weg-Frequenzwandler, insbesondere einen Druck-Frequenzwandler zu schaffen, der bei hoher Auflösung und Stabilität ein digital auswertbares Messignal liefert.

Diese Aufgabe wird bei einem Wandler der eingangs genannten Art gelöst, bei welchem die Membran als frequenzbestimmendes Element in einem Leitungsresonator angeordnet ist und Mittel vorgesehen sind, durch die der Leitungsresonator mit hochfrequenter elektromagnetischer Energie von einstellbarer Frequenz beaufschlagbar ist und der Leitungsresonator mit einer Detektionsschaltung verbunden ist, mit der die Frequenz der hochfrequenten Energie auf die Resonanzfrequenz des Leitungsresonators abstimmbar ist.

Dabei ist mit Vorteil die metallische Membran Teil einer Druckdose, und der Leitungsresonator ist aus zwei konzentrischen Kreiszylindern mit gemeinsamer Grundplatte und verschiedener Länge aufgebaut. Die Druckdose ist auf der oberen Stirnfläche des kürzeren inneren Zylinders mit einem Abstand zur Deckplatte und Innenfläche des äusseren längeren Zylinders derart befestigt, dass eine elektrisch leitende Verbindung zwischen der metallischen Membran und der metallisch leitenden gemeinschaftlichen Aussenfläche des inneren und der Innenfläche des äusseren Zylinders, sowie mit den diese Zylinderflächen verbindenden Grund- und Deckplatten besteht. Bei einer bevorzugten Ausführungsform ist die Druckmessdose in an sich bekannter Art aus zwei metallischen Membranen aufgebaut, zwischen denen ein evakuierter Zwischenraum liegt und deren Durchmesser kleiner als der Innendurchmesser des äusseren Zylinders des Leitungsresonators ist.

Der Leitungsresonator weist eine Resonanzfrequenz um 500 MHz auf, und seine Innenfläche sowie die Aussenfläche der Druckdose tragen eine Silberbeschichtung von 5 - 10 μm Dicke. Die Detektionsschaltung umfasst einen Mikroprozessor, einen Programmspeicher (ROM) zur Steuerung des Mikroprozessors, einen Frequenzgenerator, der vom Mikroprozessor angesteuert wird und den Leitungsresonator beaufschlagt, einen Analog-Digitalwandler nebst Hochfrequenzdiode zur Messung und Rückführung der Schwingungsamplitude vom Resonator zum Prozessor, einen Random-Access-Speicher (RAM) zur Zwischenspeicherung von Amplitudenwerten, einen Temperatursensor für den Resonator nebst Analog-Digitalwandler und EPROM-Speicher für eine für den Resonator charakteristische Temperatur-Kalibrierungskurve, sowie eine Anzeigestufe für vom Mikroprozessor ausgegebene Messwerte.

Ein Ausführungsbeispiel der Erfindung ist in den Figuren der Zeichnung schematisch dargestellt. Es zeigen

Fig. 1 einen Leitungsresonator im Schnitt, welcher in einem erfindungsgemässen Messgrössenwandler verwendet wird, und

Fig. 2 eine Gesamtschaltung eines erfindungsgemässen Messgrössenwandlers.

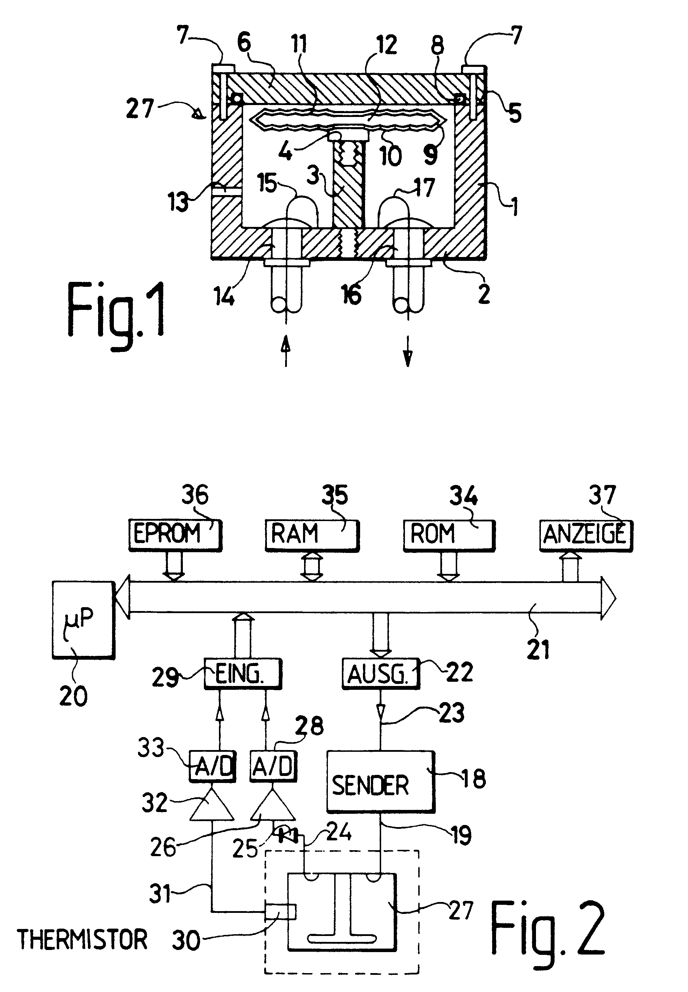

Der Leitungsresonator 27 gemäss Fig 1 umfasst einen kreiszylindrischen Becher 1 mit einer Bodenplatte 2. Die Bodenplatte 2 trägt konzentrisch zum Becher 1 einen inneren Zylinder 3, dessen oberes Ende 4 unterhalb des oberen Randes 5 des Bechers 1 liegt. Auf diesem Rand 5 ist ein Deckel 6 mit Schrauben 7 über einen O-Ring 8 vakuumdicht aufgeschraubt. Becher 1, Zylinder 3 und Deckel 6 bestehen aus Metall und sind miteinander elektrisch leitend verbunden. Dabei ist es wichtig, dass der leitende Kontakt zwischen den Auflageflächen von Becher 1 und Deckel 6 direkt besteht. Auf das obere Ende 4 des Zylinders 3 ist eine Druckdose 9 aufgeschraubt, welche aus einer unteren 10 und aus einer oberen metallischen Membrane 11 aufgebaut ist. Zwischen den Membranen 10 und 11 befindet sich in an sich bekannter Art ein evakuierter Zwischenraum 12 derart, dass bei Schwankungen des äusseren Luftdruckes die obere Membrane 11 sich mehr oder weniger dem Deckel 6 nähert. Das Innere des Leitungsresonators ist durch ein Druckausgleichsloch 13 mit der Umgebungsluft verbunden. Die Druckdose 9 ist durch die Verschraubung mit dem Zylinder 3 elektrisch leitend verbunden.

Die obere Membrane 11 und der Deckel 6 bilden somit zwei Elektroden eines Kondensators mit druckabhängiger Kapazität. Durch diese Kapazität ist die Eigenfrequenz des Leitungsresonators wesentlich bestimmt. Durch Einkopplung elektromagnetischer hochfrequenter Energie durch ein Loch 14 in der Bodenplatte 2 mittels einer Koppelschlaufe 15 kann der Resonator zu Schwingungen angeregt werden. Die Amplitude einer angeregten Schwingung kann durch Auskopplung elektromagnetischer Energie durch ein zweites Loch 16 in der Bodenplatte 2 mittels einer zweiten Koppelschlaufe 17 bestimmt werden. Zur Erzielung eines hohen Gütefaktors Q des Resonators ist die Oberfläche von Becher 1, Platte 2, Zylinder 3, Deckel 6 und Druckdose 9 mit einer 5 - 10 µ dicken Silberschicht belegt. Der Resonator ist so dimensioniert, dass er je nach Lage der Membrane 11 eine Resonanzfrequenz um 500 MHz aufweist. Variiert man also die Erregerfrequenz an der Einkopplungsschlaufe 15, so wird beim Erreichen der druckabhängigen Resonanzfrequenz die Amplitude der Resonatorschwingung stark ansteigen. Diese Schwingung gelangt über die Auskoppelschleife 17 auf eine Detektionsschaltung, mit der eine präzise Resonazabstimmung der Erregerfreqeunz möglich ist. Es wurde eine mittlere Detektionsempfindlichkeit des Druck-Frequenzwandlers von 300 kHz/mbar erreicht.

Fig. 2 zeigt eine Schaltung des Messgrössenwandlers. Der Leitungsresonator 27 wird von einem Sender 18 über eine Leitung 19 mit elektromagnetischer Energie von einstellbarer Frequenz beaufschlagt. Der Sender 18 ist ein Frequenzsynthesizer, dessen Frequenz von einem Mikroprozessor 20 über einen Datenbus 21, eine Ausgangsstufe 22 und eine Steuerleitung 23 eingestellt wird. Die im Resonator 27 vorhandene Schwingung wird über eine Leitung 24 auf eine Hochfrequenz-Detektionsdiode 25 zur Gleichrichtung ausgekoppelt. Die resultierende Gleichspannung wird in einem Verstärker 26 verstärkt, in einem Analog-Digitalwandler (A/D) 28 gemessen und in ein digitales Signal umgesetzt, welches über eine Eingangsstufe 29 und den Datenbus 21 dem Mikroprozessor 20 zugeführt ist. Am Leitungsresonator 27 ist als Temperatursensor ein Thermistor 30 vorgesehen, dessen Ausgangssignal über eine Leitung 31, einen Verstärker 32, einen Analog-Digitalwandler (A/D) 33, die Eingangsstufe 29 und den Datenbus 21 ebenfalls dem Mikroprozessor 20 zugeführt ist. Über den Datenbus 21 wird der Messablauf von einem in einem Programmspeicher (ROM) 34 permanent gespeicherten Programm mittels des Mikroprozessors 20 gesteuert. Dabei auftretende Zwischenwerte werden in einem Arbeitsspeicher (RAM) 35 zwischengespeichert. Zur Berücksichtigung des Temperaturverlaufes der Resonanzfrequenz $f_0$ (p, T) des Leitungsresonators 27 ist ein programmierbarer Permanentspeicher (EPROM) 36 vorgesehen, in den die Temperatureichkurve des jeweils verwendeten Resonators 27 eingespeichert wird. Vom Mikroprozessor ausgegebene Messwerte werden über den Datenbus 21 einer Anzeigestufe 37 zugeführt.

Die soweit beschriebene Schaltung kann durch verschiedene, im Speicher 34 gespeicherte Programme für verschiedene Auswerteverfahren zur Ermittlung des Luftdruckes aus der Resonanzkurve des Leitungsresonators 27 verwendet werden. Im einfachsten Fall wird man am Sender 18 eine Reihe von Frequenzen im Bereich häufig vorkommender Resonanzfrequenzen (z. B. 500 MHz) anwählen und die zugehörigen Erregungsamplituden im Arbeitsspeicher 35 speichern. Die Frequenz für die maximale Amplitude wird mittels eines Korrekturwertes aus der Eichkurve im Permanentspeichen 36 vom Prozessor 20 auf eine Standardtemperatur (z. B. 20° C) reduziert, und aus der reduzierten Frequenz $f_0$ wird der Druck p ($f_0$) berechnet und auf die Anzeige 37 gegeben.

Eine besonders empfindliche Abstimmungsanzeige erhält man dann, wenn man die Frequenz des Senders 18 periodisch variiert und zweckmässig die Resonatorerregung für die maximale und die minimale Frequenz detektiert. Die Differenz der genannten Erregungen wird Null, wenn der Frequenzmittelwert gleich der Resonanzfrequenz ist. Betreibt man den Messgrössenwandler als Druck-Frequenz-Wandler, so wird man zweckmässig den Temperatureinfluss auf die Grösse des Spaltes zwischen der Metallmembrane 11 und dem Deckel 6 noch zusätzlich dadurch kompensieren, dass man für den Innenzylinder 3 und den Aussenzylinder 1 Werkstoffe auswählt, deren thermische Ausdehnungskoeffizieneten eine an die Abmessungen der Zylinder angepasste Differenz aufweisen.

Varianten des beschriebenen Ausführungsbeispiels können zweckmässig sein. Soll die Druckdifferenz zwischen zwei gasförmigen oder flüssigen Medien gemessen werden, so wird man zwei Druckkammern durch nur eine metallische Membrane trennen, deren Verschiebungsweg in der oben beschriebenen Weise mittels eines Leitungsresonators gemessen werden kann.

**Patentansprüche**

1. Kapazitiver Weg-Frequenz-Messgrössenwandler, insbesondere Druck-Frequenz-Wandler mit wenigstens einer von dem zu messenden Druck beaufschlagten metallischen Membran (10, 11), deren Lage gegenüber einer Gegenelektrode (6) sich in Abhängigkeit von der Messgrösse ändert, wobei die Membran (11) als frequenzbestimmendes Element in einem Leitungsresonator (27) angeordnet ist und Mittel (18) vorgesehen sind, durch die der Leitungsresonator (27) mit hochfrequenter elektromagnetischer Energie von einstellbarer Frequenz beaufschlagbar ist und der Leitungsresonator mit einer Detektionsschaltung (25, 26, 28, 29, 20, 21) verbunden ist, mit der die Frequenz der hochfrequenten Energie auf die Resonanzfrequenz des Leitungsresonators (27) abstimmbar ist dadurch gekennzeichnet, dass die metallische Membran (11) Teil einer Druckdose (10, 11) ist und dass der Leitungsresonator (27) aus zwei konzentrischen Kreiszylindern (1, 3) mit gemeinsamer Grundplatte (2) und verschiedener Länge aufgebaut ist, wobei die Druckdose (10, 11) auf der oberen Stirnfläche (4) des kürzeren inneren Zylinders (3) und mit einem Abstand zur Deckplatte (6) und Innenfläche des äusseren längeren Zylinders (1) derart befestigt ist, dass eine elektrisch leitende Verbindung zwischen der metallischen Membran (11) und der metallisch leitenden gemeinschaftlichen Aussenfläche des inneren (3) und der Innenfläche des äusseren Zylinders (1) sowie mit den diese Zylinderflächen verbindenden Grund (2) - und Deckplatten (6) besteht.

2. Messgrössenwandler nach Anspruch 1, dadurch gekennzeichnet, dass die Druckmessdose (10, 11) in an sich bekannter Art aus zwei metallischen Membranen (10, 11) aufgebaut ist, zwischen denen ein evakuierter Zwischenraum (12) liegt und deren Durchmesser kleiner als der Innendurchmesser des äusseren Zylinders (1) des Leitungsresonators (27) ist.

3. Messgrössenwandler nach Anspruch 2, dadurch gekennzeichnet, dass der Leitungsresonator (27) eine Druckausgleichsöffnung (13) zwischen Innenraum und Umgebung aufweist.

4. Messgrössenwandler nach Anspruch 3, dadurch gekennzeichnet, dass die gemeinsame Grundplatte (2) der Kreiszylinder (1, 3) eine Öffnung (14) für eine Einkopplungsschlaufe (15) und eine Öffnung (16) für eine Auskopplungsschlaufe (17) für die hochfrequente elektromagnetische Energie aufweist.

5. Messgrössenwandler nach Anspruch 4, dadurch gekennzeichnet, dass der Leitungsresonator (27) eine Resonanzfrequenz um 500 MHz aufweist.

6. Messgrössenwandler nach Anspruch 5, dadurch gekennzeichnet, dass die Innenfläche des Leitungsresonators und die Aussenfläche der Druckdose (10, 11) eine Silberbeschichtung von 5 bis 10 μm Dicke aufweisen.

7. Messgrössenwandler nach einem der Ansprüche 1 - 6, dadurch gekennzeichnet, dass die Werkstoffe von Innenzylinder (3) und Aussenzylinder (1) so ausgewählt sind, dass sich der Abstand zwischen Druckdose (10, 11) und Deckplatte (6) des Aussenzylinders (1) bei Temperaturänderungen möglichst wenig ändert.

8. Messgrössenwandler nach einem der Ansprüche 1 - 7, dadurch gekennzeichnet, dass die Detektionsschaltung umfasst: einen Mikroprozessor (20), einen Programmspeicher (ROM) (34) zur Steuerung des Mikroprozessors (20), einen Frequenzgenerator (18), der vom Mikroprozessor (20) angesteuert wird und den Leitungsresonator (27) beaufschlagt, einen Analog-Digital-Wandler (28) nebst Hochfrequenzdiode (25) zur Messung und Rückführung der Schwingungsamplitude vom Resonator (27) zum Prozessor (20), einen Random-Access-Speicher (RAM) (35) zur Zwischenspeicherung von Amplitudenwerten, einen Temperatursensor (30) für den Resonator (27) nebst Analog-Digital-Wandler (33) und EPROM-Speicher (36) für eine, für den Resonator (20) charakteristische Temperatur-Kalibrierungskurve, sowie eine Anzeigestufe (37) für vom Mikroprozessor (20) ausgegebene Messwerte.

9. Messgrössenwandler nach einem der Ansprüche 1 - 8, dadurch gekennzeichnet, dass die Frequenz der hochfrequenten elektromagnetischen Energie, mit der der Leitungsresonator (27) beaufschlagt wird, periodisch variiert und dass die Detektionsschaltung (25, 26, 28, 29, 20, 21) eine Abstimmung auf eine mittlere Frequenz erlaubt derart, dass die Erregung des Resonators (27) bei zwei verschiedenen Frequenzen gleich ist.

**Claims**

1. Capacitive displacement-frequency-transducer, particularly pressure-frequency transducer with at least one metallic membrane (10, 11) exposed to the pressure to be measured and the position of which varies in relation to a counter-electrode (6) in dependence of the measured quantity, the membrane (11) being arranged in a line resonator (27) as a frequency determining element and means (18) being provided for feeding high frequency electromagnetic energy of adjustable frequency to the line resonator (27) and the line resonator being coupled to a detecting circuit (25, 26, 28, 29, 20, 21) for tuning the frequency of the high frequency energy to the resonance frequency of the line resonator (27), thereby characterized, that the metallic membrane (11) is part of a barometric cell (10, 11) and that the line resonator (27) is composed of two concentric circular cylinders (1, 3) with a common base plate (2) and of different lengths, the barometric cell (10, 11) being secured to the upper face (4) of the shorter inner cylinder (3) with a clearance to the cover plate (6) and to the inner surface of the longer outer cylinder (1) such, that an electrically conductive connection exists between the metallic membrane (11) and the metallic conductive common surface consisting of the outer surface of the inner cylinder (3), the inner surface of the outer cylinder (1) and the base and cover plates (2, 6) connecting said surfaces of the cylinders.

2. Transducer according to claim 1, thereby characterized, that the barometric cell (10, 11) comprises two metallic membranes (10, 11) in a manner known as such, an evacuated space (12) existing between said metallic membranes and the diameter of said membranes being smaller than the inner diameter of the outer cylinder (1) of the line resonator (27).

3. Transducer according to claim 2, thereby characterized, that the line resonator (27) comprises a pressure compensating outlet (13) between its interior and surrounding spaces.

4. Transducer according to claim 3, thereby characterized, that the common base plate (2) of the circular cylinders (1, 3) comprises an aperture (14) for an exciting loop (15) and an aperture (16) for an output loop (17) for the high frequency electromagnetic energy.

5. Transducer according to claim 4, thereby characterized that the line resonator (27) has a natural frequency of oscillation of about 500 MHz.

6. Transducer according to claim 5, thereby characterized that the inner surface of the line resonator and the outer surface of the barometric cell (10, 11) have a silver coating of 5 micro m to 10 micro m thickness.

7. Transducer according to any one of claims 1 - 6, thereby characterized, that the materials of inner cylinder (3) and outer cylinder (1) are selected such, that the clearance between barometric cell (10, 11) and cover plate (6) of the outer cylinder (1) has a minimum of variation in case of changes in temperature.

8. Transducer according to any one of claims 1 - 7, thereby characterized, that the detecting circuit comprises: a microprocessor (20), a program memory (ROM) (34) for controlling the microprocessor (20), a frequency generator (18) being controlled by the microprocessor (20) and feeding the line resonator (27), an analog-digital-converter (28) with a high frequency diode (25) for measuring and feeding back the amplitude of oscillation from the resonator (27) to the microprocessor (20), a random access memory (RAM) (35) for intermediate storage of amplitude values, a temperature sensor (30) for the resonator (27) cooperating with an analog-digital-converter (33) and an EPROM-memory (36) for storage of a temperature calibration graph characteristic of the resonator (27), as well as a display stage (37) for measured values output by the microprocessor (20).

9. Transducer according to any one of claims 1 - 8, thereby characterized, that the frequency of the high frequency electromagnetic energy fed to the line resonator (27) varies periodically and that the detecting circuit (25, 26, 28, 29, 20, 21) allows tuning to a center frequency such, that the excitation of the resonator (27) at two different frequencies will be equal.

**Revendications**

1. Transducteur capacitif déplacement-fréquence, spécialement transducteur pression-fréquence avec au moins une membrane métallique (10, 11) exposée à la pression à mesurer et dont la position varie par rapport à une contre-électrode (6) en fonction de la grandeur mesurée, la membrane (11) étant comme élément déterminant la fréquence aménagée dans un résonateur de ligne (27), et des moyens étant disposés pour alimenter le résonateur de ligne (27) en énergie électromagnétique haute fréquence à fréquence ajustable, et le résonateur de ligne étant relié à un circuit de détection (25, 26, 28, 29, 20, 21) avec lequel la fréquence de l'énergie haute fréquence peut être accordée à la fréquence de résonance du résonateur de ligne (27), caractérisé par le fait que la membrane métallique (11) constitue un élément d'une capsule métallique (10, 11), et que le résonateur de ligne (27) est constitué de deux cylindres circulaires concentriques (1, 3) ayant une plaque de base (2) commune et des longueurs différentes, la capsule métallique (10, 11) étant attachée à la face supérieure (4) du cylindre intérieur (3) plus court avec un écartement entre soi-même et la plaque de couverture (6) et la surface intérieure du cylindre extérieur (1) plus long, de telle manière qu'une connexion électriquement conductrice est établie entre la membrane métallique (11) et la surface métallique conductrice commune constituée par la surface extérieure du cylindre intérieur (3), la surface intérieure du cylindre extérieur (1) et les plaques de base et de couverture (2, 6) raccordant les dites surfaces des cylindres.

2. Transducteur selon la revendication 1, caractérisé par le fait que la capsule métallique de mesure (10, 11) est constituée de manière connue en soi de deux membranes métalliques (10, 11), un espace intermédiaire (12) évacué se trouvant entre les dites membranes métalliques, et les diamètres des dites membranes étant plus petits que le diamètre intérieur du cylindre extérieur (1) du résonateur de ligne (27).

3. Transducteur selon la revendication 2, caractérisé par le fait que le résonateur de ligne (27) est muni d'une ouverture d'égalisation de pression (13) entre sa partie intérieure et son environnement.

4. Transducteur selon la revendication 3, caractérisé par le fait que la plaque de base (2) commune des cylindres circulaires (1, 3) est munie d'une ouverture (14) pour une boucle (15) d'alimentation et d'une ouverture (16) pour une boucle (17) de sortie pour l'énergie électromagnétique haute fréquence.

5. Transducteur selon la revendication 4, caractérisé par le fait que le résonateur de ligne (27) a une fréquence de résonance d'environ 500 MHz.

6. Transducteur selon la revendication 5, caractérisé par le fait que la surface intérieure du résonateur de ligne et la surface extérieure de la capsule métallique (10, 11) sont munies d'une couche d'argent d'une épaisseur de 5 à 10 micro m.

7. Transducteur selon une des revendications 1 - 6, caractérisé par le fait que les matériaux du cylindre intérieur (3) et du cylindre extérieur (1) sont choisis de telle manière que l'écartement entre la capsule métallique (10, 11) et la plaque de couverture (6) du cylindre extérieur (1) possède un minimum de variation lors de changements de la température.

8. Transducteur selon une des revendications 1 - 7, caractérisé par le fait que le circuit de détection comprend: un microprocesseur (20), une mémoire de programmes (ROM) (34) pour la commande du microprocesseur (20), un générateur de fréquences (18) commandé par le microprocesseur (20) et alimentant le résonateur de ligne (27), un convertisseur analogique-numérique (28) avec une diode de haute fréquence (25) pour mesurer et ramener l'amplitude d'oscillation du résonateur (27) au processeur (20), une mémoire à accès sélectif (RAM) (35) pour l'emmagasinage temporaire de valeurs d'amplitude, un détecteur de température (30) pour le résonateur (27) avec convertisseur analogique-numérique (33) et un mémoire EPROM (36) pour l'emmagasinage d'une courbe de calibrage de la température caractéristique du résonateur (27), ainsi qu'un étage d'affichage (37) pour des valeurs de mesure sorties par le microprocesseur (20).

9. Transducteur selon une des revendications 1 - 8, caractérisé par le fait que la fréquence de l'énergie électromagnétique haute fréquence avec laquelle on alimente le résonateur de ligne (27) varie périodiquement et que le circuit de détection (25, 26, 28, 29, 20, 21) permet un réglage à une fréquence moyenne de telle manière que l'excitation du résonateur (27) soit la même pour deux fréquences égales.

# Fig.1

# Fig.2